# EUROPEAN PATENT APPLICATION

(11) **EP 1 249 793 A2**
(43) Date of publication of application: **16.10.2002**
(21) Application number: 02076299.3
(22) Date of filing: 29.03.2002
(51) Int. Cl.: G06T 17/50

(54) **Template for an image capture device**

(30) Priority: 09.04.2001 US 829347
(71) Applicant: EASTMAN KODAK COMPANY, Rochester, New York 14650 (US)
(72) Inventor: Stephany, Thomas Michael, c/o Eastman Kodak Comp., Rochester, New York 14650-2201 (US); Squilla, John R., c/o Eastman Kodak Company, Rochester, New York 14650-2201 (US); Olson, Donald Edward, c/o Eastman Kodak Company, Rochester, New York 14650-2201 (US); Manico, Joseph Anthony, c/o Eastman Kodak Company, Rochester, New York 14650-2201 (US)
(74) Representative: Nunney, Ronald Frederick Adolphe

(57) **Abstract**

An apparatus and method of generating an animation model. The method comprises providing an image capture device, the image capture device having an image display; displaying a template in the image display; capturing an image of a subject when the subject is framed by the template; and generating an animation model using the captured image.

## Description

The present invention relates generally to image capture devices, and more particularly, to a template for an image capture device.

Image capture devices are used to capture images, and include such known devices as photographic film cameras, digital cameras, camcorders, and scanners. Images that are captured, for example, on other origination sources (e.g., photographic paper, slides and negatives) can be converted to digital images by scanners.

The images captured are two-dimensional representations of the three-dimensional world. The two-dimensional representation may be used for various purposes.

U.S. Patent No. 6,061,532 (Bell) relates to an apparatus and method for creating and merging actual user images into video displays to create personalized, animated video displays. When collecting images of the user for the video, the image of the user must be suitably composed for inclusion in the video. For example, for a close-up "scene", the image must capture the user's face.

U.S. Patent No. 5,878,396 (Henton) relates to facial imaging synchronized with synthetic speech. For such synchronization, an image or series of images are collected which dynamically depict sounds transitions with lip, teeth, and tongue positioning. Accordingly, the collected facial image(s) must be suitably and sufficiently sized so as to be able to discern the lip, teeth, and tongue positioning.

Accordingly, the operator of the image capture device (hereinafter referred to as the "photographer" for ease of discussion) must properly position the user within the image capture device's viewfinder so as to obtain a suitable facial image using the image capture device.

Photographers generally compose the subject in a portrait mode, such as in a school graduation photograph wherein the student is posed and a single image is taken. Aids have been developed to assist a professional photographer in posing a subject or group of subjects. For example, U.S. Patent No. 5,717,454 (Adolphi et al) relates to a method and apparatus for facilitating the taking of portrait photographs by providing video image of the subject with a professionally created posing mask overlaid on the video image. While this apparatus may have achieved a certain degree of success for its particular application, it is not suitable for posing a subject for capturing a facial image wherein the details of the facial expressions are of interest, for example, for facial animation such as when synchronizing facial images with speech.

Accordingly, a need continues to exist for an apparatus and method for posing a subject so as to capture an image suitable for use in a facial animation. That is, there is a need for an image capture device which identifies predetermined poses that the photographer can use to generate sufficient information for lifelike animations.

An object of the present invention is to provide an apparatus and method for posing a subject so as to capture an image suitable for use in a facial animation.

Another object of the invention is to provide a template to capture an image for use in generating an animation model.

These objects are given only by way of illustrative example. Thus, other desirable objectives and advantages inherently achieved by the disclosed invention may occur or become apparent to those skilled in the art. The invention is defined by the appended claims.

According to one aspect of the invention, there is provided a method of generating an animation model. The method comprises providing an image capture device, the image capture device having an image display; displaying a template in the image display; capturing an image of a subject when the subject is framed by the template; and generating an animation model using the captured image.

According to another aspect of the invention, there is provided a method of generating an animation model. The method comprises providing an image capture device, the image capture device having an image display and first and second templates, the first template differing from the second template; displaying the first template in the image display; aligning the first template with a subject; capturing a first image of the subject; displaying the second template in the image display; aligning the second template with a subject; capturing a second image of the subject; and generating an animation model using the first and second captured images.

According to a further aspect of the invention, there is provided an image capture device for generating an animation model. The image capture device comprises a plurality of templates, each of the plurality of templates differing from each other; each template comprising an outline representative of a predetermined position of a subject; an image display for displaying each of the plurality of templates; an image capture member for capturing an image when the subject is framed within one of the plurality of templates; and means for generating an animation model using the captured images.

According to a still further aspect of the invention, there is provided an image capture device comprising a viewfinder for locating a subject; a first, second, third, and fourth template, each template differing from another template, each template comprising an outline representative of a predetermined position; a rotatable template member for moving the first second, third, and fourth template relative to the viewfinder to individually align the first second, third, and fourth template in overlapping registration with the viewfinder; and an image capture member for capturing a first, second, third, and fourth image when the first, second, third, and fourth template is aligned, respectively, with the subject.

The present invention provides an apparatus and method for posing a subject so as to capture an image suitable for use in generating an animation model, and provides a template to capture an image for use in generating an animation model.

The foregoing and other objects, features, and advantages of the invention will be apparent from the following more particular description of the preferred embodiments of the invention, as illustrated in the accompanying drawings.

FIG. 1 shows a perspective view of an image capture device in accordance with the present invention. A subject plane and projection lines are indicated by dashed lines.

FIG. 2 shows a rear view of the image capture device of FIG. 1 illustrating a template in an image display.

FIG. 3 shows a rear view of the image capture device of FIG. 1 illustrating a subject framed within a template in an image display.

FIGS. 4(a)-4(d) each show a template for use with the image capture device of FIG. 1.

FIG. 5 shows a flow diagram illustrating a method in accordance with the present invention for use with the image capture device of FIG. 1.

FIG. 6 shows a perspective view of a second image capture device in accordance with the present invention. A subject plane and projection lines are indicated by dashed lines.

FIG. 7 shows a front view of the image capture device of FIG. 6 illustrating a template member.

FIG. 8 shows a rear view of the image capture device of FIG. 6 illustrating the template member and template.

FIG. 9 shows a rear view of the image capture device of FIG. 6 with the template aligned with a subject.

FIG. 10 shows the template member of FIGS. 8 and 9.

FIG. 11 shows a flow diagram illustrating a second method in accordance with the present invention for use with the image capture device of FIG. 6.

FIG. 12 shows another embodiment of a template member in accordance with the present invention.

The following is a detailed description of the preferred embodiments of the invention, reference being made to the drawings in which the same reference numerals identify the same elements of structure in each of the several figures.

When using an image capture device to capture a facial image wherein the details of the facial expressions are of interest, the photographer must select poses that lend themselves to capturing an accurate representation of the subject's face for the animation. For example, the subject must be of sufficient size so as to gather accurate facial information. Further, if a three-dimensional representation is desired, more than one image of the subject (and/or desired action of the subject) would need to be captured so as to render a realistic experience.

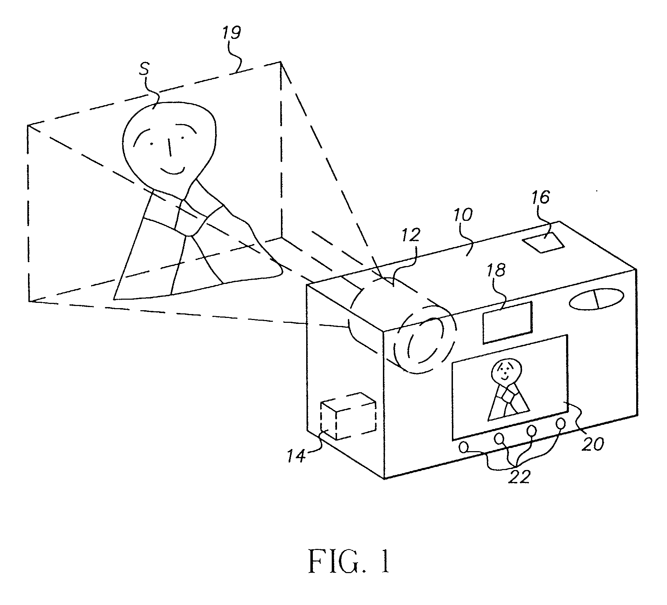

As indicated above, known image capture devices include photographic film cameras, digital cameras, camcorders, and scanners. Figure 1 shows an image capture device in accordance with the present invention which is a digital camera **10.** Digital camera **10** includes an image taking member **12** such as a lens or other optical member, an image capture member **14,** an activation member **16,** and a viewfinder **18** for locating the subject whose image is to be captured. When activation member **16** is activated by the photographer, image capture member **14** captures an image. Such a capture member **14** can be a digital capture member such as a floppy disk or memory card, in which images are stored in digital form. In Figure 1, the subject S whose image is to be captured is illustrated in a subject plane **19.**

Still referring to Figure 1, digital camera **10** includes an image display **20** to provide an electronic representation of the viewfinder field, such as a digital representation on a liquid crystal display (LCD) or organic light emitting diode (OLED). Image display **20** may also be used to display a menu of camera use functions or other user-selected features of the image capture device. Alternatively, designators, such as selection buttons **22** may be used to select camera functions. For example, when the generation of images for animation is desired, one selection button may be used designate this function, hereinafter be referred to as the animation mode. Thus, the photographer would select the animation mode by selecting the appropriate selection button.

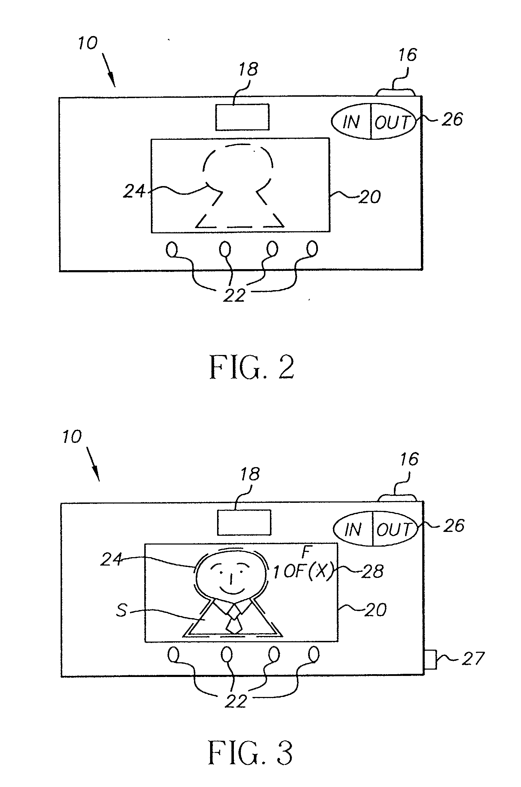

Referring now to Figure 2, when the photographer has selected the animation mode, a template **24** (shown in dashed lines) is displayed in image display **20.** Template **24** is not captured with the image, rather template **24** assists the photographer in framing the subject. Template **24** is an electronically generated template. As shown in Figure 2, since it is desired to capture the facial image of the subject, template **24** is configured as an outline or silhouette of a frontal view of a head and upper body of a person. That is, template **24** is representative of a person's head and upper body. The photographer locates the subject in viewfinder **18** and aligns template **24** with the subject so as to frame the subject within template **24** of image display **20.** This can be accomplished by the photographer either moving closer/farther from the subject or, if available, using a lens zoom function of the image capture device (shown in Figure 2 as a lens zoom selection button **26**). Figure 3 illustrates the subject S framed within template **24.** Once framed within template **24,** activation member **16** is activated to capture the image on image capture member **14** (shown in Figure 1). Image display **20** is used to frame the subject within template **24.**

Digital camera **10** may include a linking connector **27** to connect digital camera **10** to a computer (not shown).

Digital camera **10** may also include an optional menu **28** in image display **20** providing status information or user information to the photographer. Status information could include the number of the pictures taken, for example, picture 1 of n number of pictures used to generate the animation.

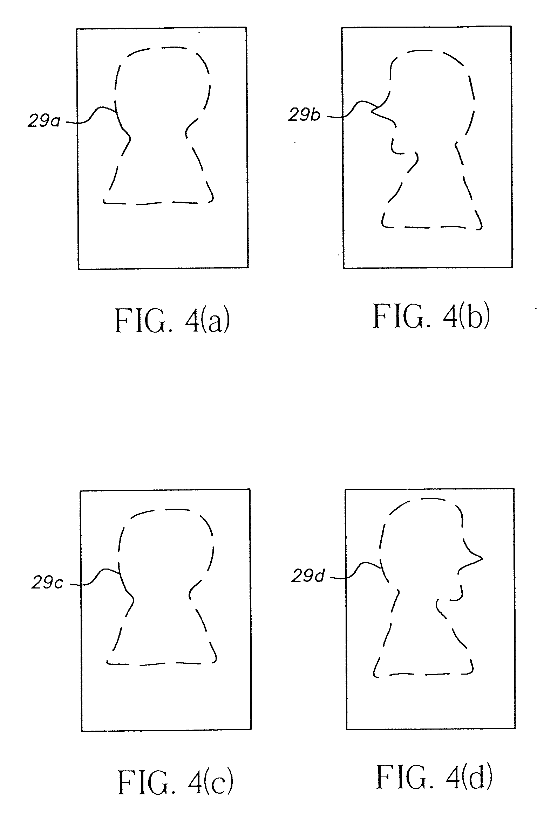

Applicants have discovered that capturing images of the subject at predetermined positions, for example, 0, 90, 180, and 270 degrees, enhances the animation, thereby providing an animation that displays lifelike manners. Illustrated in Figures 4(a) through 4(d) are four templates **29(a)-29(d)** each showing a predetermined pose for the subject. For example, template **29(a)** shows a pose at 0 degrees for a frontal view, template **29(b)** shows a pose at 90 degrees for a left side view, template **29(c)** shows a pose at 180 degrees for a back side view, and **29(d)** shows a pose at 270 degrees for a right side view.

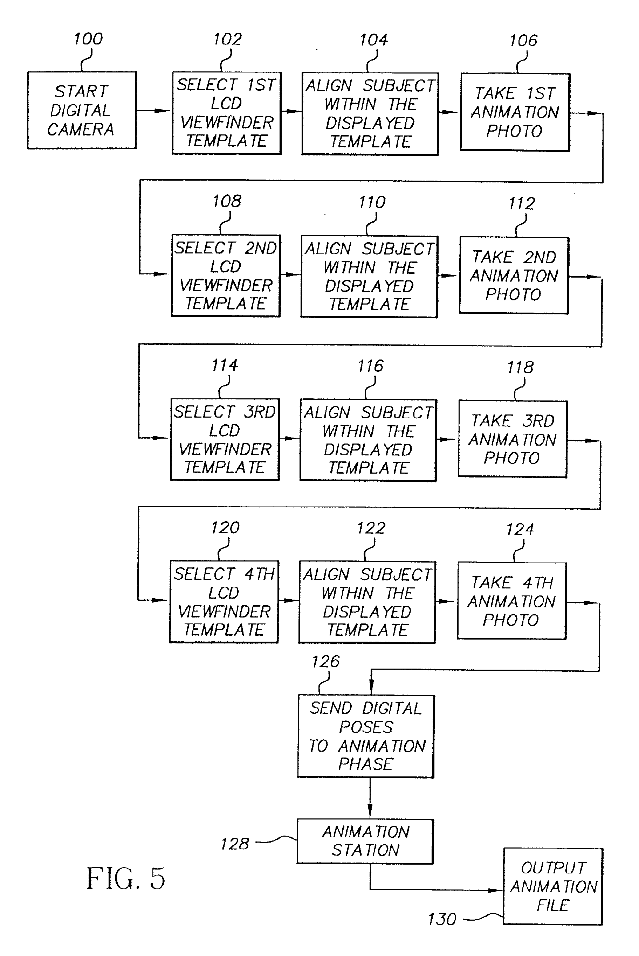

Figure 5 shows a flow diagram to illustrate capturing a plurality of images at predetermined positions. For illustration purposes, four predetermined positions are used.

As illustrated in Figure 5, digital camera **10** is powered on (step **100**) and the animation mode is selected. Once animation mode is selected, template **29(a)** is displayed in image display **20** (step **102**). The photographer aligns template **29(a)** with the subject (step **104**) and activates activation member **16** to capture a first image (step **106**). Once the image is captured, animation mode next (preferably, automatically) displays template **29(b)** in image display **20** (step **108**). The photographer aligns template **29(b)** with the subject (step **110**) and activates activation member **16** to capture a second image (step **112**). These steps are repeated to capture a third image using template **29(c)** (steps **114-118**) and a fourth image using template **29(d)** (steps **120-124**). The four captured images may then be manipulated to generated an animation model (step **126**). Images captured from digital camera **10 (**step **126)** are transmitted to an animation station **(**step **128)** where the images are processed into animation using software techniques known to those skilled in the art, such as described in COMPUTER FACIAL ANIMATION, by F. Parke and K. Waters, published by A. K. Peters, Wellesley, MA, 1996, and "Synthesizing Realistic Facial Expressions from Photographs" by Pighin et al, presented at SIGGRAPH 98, Computer Graphics Proceedings, Annual Conference Series, 1998; pages 75-83. A resulting animation model may be transmitted to the photographer in an output animation file **(**step **130)**.

If multiple predetermined images are taken, menu **28** could indicate when the animation sequence is complete and save the sequence as a distinguishable file for later processing. In addition, if digital camera **10** is configured to preview the captured images, such as using image display **20,** the captured image could be displayed on the image display and the alignment of the template with the captured image could be verified. Further, if digital camera **10** is configured to preview the captured images, such as using image display **20,** previews of the animation model could be previewed upon image display **20** to verify the quality of the animation.

Digital camera **10** could also be connected to a computer (not shown) via linking connector **27** thus providing the same preview capabilities. Linking connector **27** could use a multiplicity of protocols and either both wired or wireless methods of connection.

Additionally, digital camera **10** could have the capability of linking the multiple images taken by templates **29(a)-29(d)** as a stored profile which could be used for additional animations at another time. This profile could be stored within digital camera **10,** or sent elsewhere by virtue of linking connector **27.**

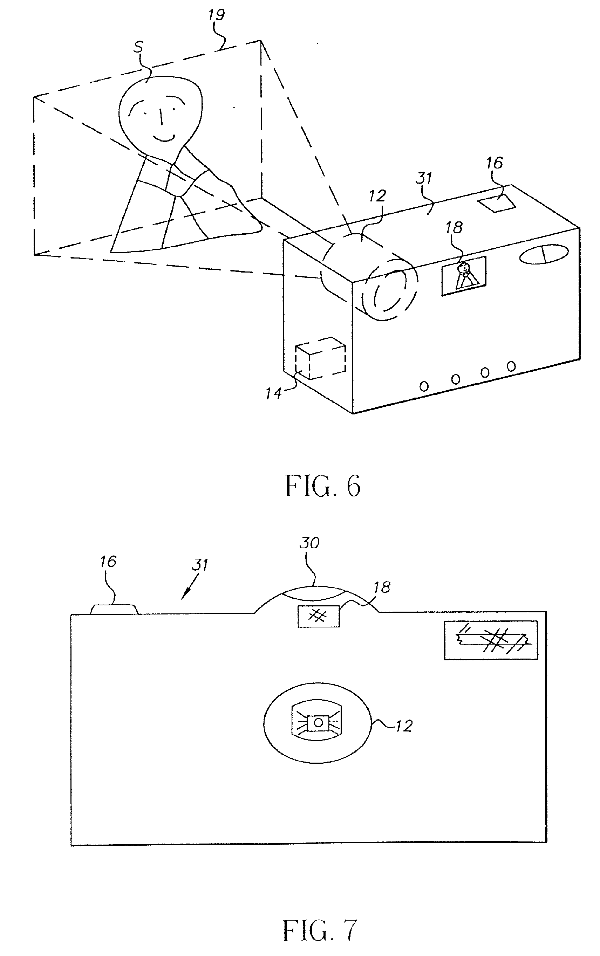

Referring now to Figures 6, Figure 6 shows an image capture device in accordance with the present invention which is a photographic film camera **31.** Film camera **31** includes image taking member **12** such as a lens or other optical member, an image capture member **14,** an activation member **16,** and a viewfinder **18** for locating the subject whose image is to be captured. When activation member **16** is activated by the photographer, image capture member **14** captures an image. Such a capture member **14** is a film member which uses photosensitive film. In Figure 6, the subject S whose image is to be captured is illustrated in subject plane **19.**

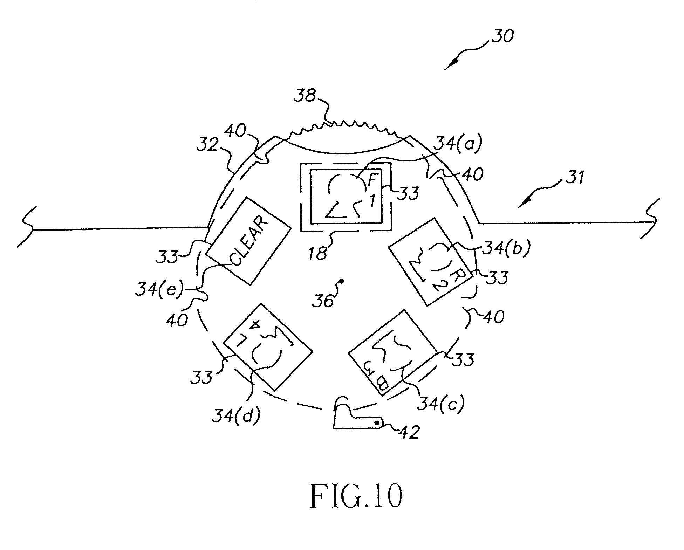

Referring now to Figures 7-10, film camera **31** includes template member **30** comprising a template wheel **32** having a plurality of template segments **33** having templates **34(a)** through **34(e)** thereon. As indicated above, Applicants have discovered that capturing images of the subject at predetermined positions enhances the animation. As such, templates disposed on template wheel **32** would differ from each other. Accordingly, each template segment **33** includes a template each having a differing predetermined pose. As illustrated in Figure 10, templates **34(a)-34(d)** each show a predetermined pose. For example, template **34(a)** shows a pose at 0 degrees for a frontal view, template **34(b)** shows a pose at 90 degrees for a left side view, template **34(c)** shows a pose at 180 degrees for a back side view, and **34(d)** shows a pose at 270 degrees for a right side view. That is, templates **34(a)-34(d)** disposed on template wheel 32 differ from each other and are configured to represent, respectively, a front view, a right side view, a back view, and a left side view of the subject. Templates **34(a)-34(d)** may be labeled accordingly, F1 **34(a),** R2 **34(b)**, B3 **34(c)** and L4 **34(d)** as detailed in Figure 10. F1 meaning front pose 1^{st} image, R2 meaning right pose 2^{nd} image, B3 meaning back (or rear) pose 3^{rd} image, and L4 meaning left pose 4^{th} image. Additionally, it should be noted that one of the templates, specifically, template **34(e),** is clear (i.e., no outline or silhouette is disposed on the template) for taking images when film camera **31** is not being used for creating an animation.

Template wheel **32** can be made of a rigid or semi-rigid material, such as cardboard or other thick paper material. Each template segment **33** can disposed in an opening of template wheel **32** and be a made of clear hard plastic or flexible cellophane. Templates **34(a)-34(e)** can be disposed on template segments **33** using a drawing material, such as pen or ink, preferably in a dashed line pattern, though a dotted line or solid line or any combination thereof could be used. As illustrated in Figure 10, templates **34(a)-34(d)** are an outline/silhouette while template **34(e)** is clear.

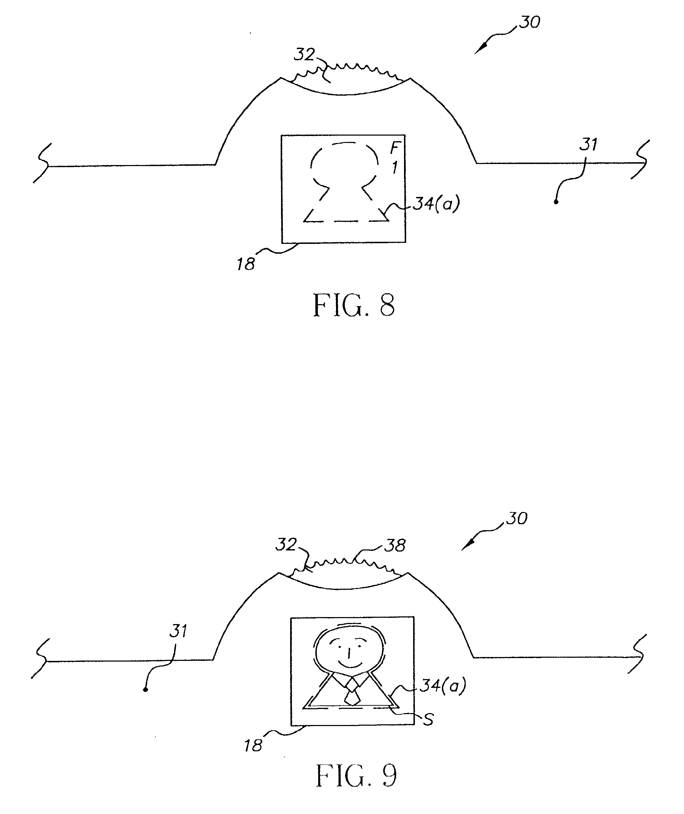

Template wheel **32** is movable relative to viewfinder **18.** As illustrated in Figures 9-10, template wheel **32** rotates about rotation point **36** to individually and separately position each of the plurality of templates **34(a)-34(e)** adjacent to and in overlapping registration with viewfinder **18** (shown in dashed outline in Figure 10) so that the template is viewed through viewfinder **18,** and subject S may be aligned with the templates through viewfinder **18.** Template wheel **32** may be automatically rotated about rotation point **36** by means known to those skilled in the art (not shown), or manually rotated by the photographer. If manually rotated, ridges or grooves **38** may be disposed on the outer edges of template wheel **32** to assist the photographer in grasping template wheel 32 to rotate template wheel **32.**

Notches **40** are disposed in the outer edges of template wheel **32.** A holding lever or retaining member **42** may be used to mate with the notches **40** to temporarily secure template wheel **32** relative to viewfinder **18**. Retaining member **42** mating with notches **40** serves as an indexed stop for template wheel **32.**

It should be understood that all references to the outline/silhouette of templates **24, 29(a)-(d),34(a)-(d)** could be a multiplicity of objects including dogs, cats and the like, and fuller shots of the person, for example, from the waist up or a full body outline/silhouette. The templates **24, 29(a)-(d),34(a)-(d)** could also instruct a photographer to photograph subjects with or without specific accessories such as glasses. Those templates that are integral parts of template wheel **32,** could also be exchangeable within film camera **31** or user selectable within digital camera **10.**

Those skilled in the art may recognize other embodiments in which to provide a plurality of templates in alignment with the viewfinder.

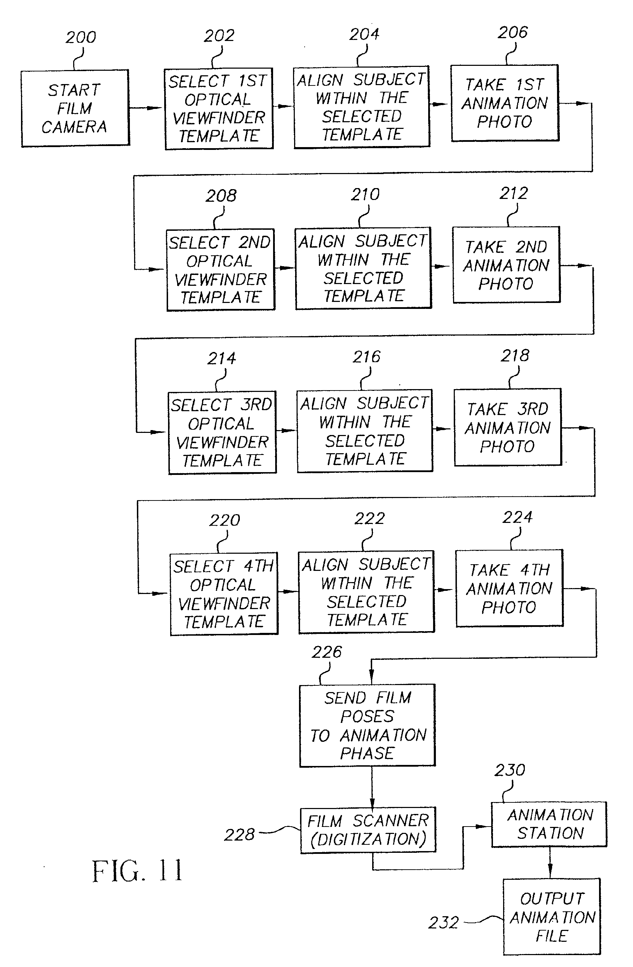

Figure 11 show a flow diagram illustrating a method in accordance with the present invention for film camera **31**. Referring to Figure 11, the method of capturing the images using a conventional film camera is similar to capturing the images using a digital camera. Film camera **31** is powered on (step **200**) and template wheel **32** is rotated to position template **34(a)** into overlapping registration with viewfinder **18** (step **202**). The photographer aligns template **34(a)** with the subject (step **204**) and activates activation member **16** to capture a first image (step **206**). Next, template **34(b)** is selected and rotated into overlapping registration with viewfinder **18** (step **208**). The photographer aligns template **34(b)** with the subject (step **210**) and activates activation member **16** to capture a second image (step **212**). These steps are repeated to capture a third image using template **34(c)** (steps **214-218**) and a fourth image using template **34(d)** (steps **220-224**). The four captured images may then be manipulated to generated an animation model (step **226**).

Images captured from film camera **31** (step **226**) are digitized using, for example, a film scanner (step **228**), and the resulting digitized output is input to animation station (step **230**), where the images are processed into an animation model using software techniques known to those skilled in the art, such as described in COMPUTER FACIAL ANIMATION, by F. Parke and K. Waters, published by A. K. Peters, Wellesley, MA, 1996, and "Synthesizing Realistic Facial Expressions from Photographs" by Pighin et al, presented at SIGGRAPH 98, Computer Graphics Proceedings, Annual Conference Series, 1998; pages 75-83. A resulting animation model may be transmitted to the photographer in an output animation file (step **232**).

An image capture device may include both a viewfinder and an image display. Similarly, an image capture device can comprise an image capture member to capture images in both electronic form and analog form (e.g., photosensitive film). For example, the Preview Camera, by Eastman Kodak Company employs both an electronic and analog image capture member. Accordingly, in such an image capture device, a template may be disposed both individually and/or simultaneously in the viewfinder and image display.

Instructions on how to capture images for the purpose of generating an animation model may be provided. Such instructions can be placed on a sheet of paper or other material. Or alternatively, such instructions can be placed on a sticker or sheet of paper having an adhesive so as to adhere the instructions to an image capture device.

An existing image capture device can be modified to accept a template so that an animation model can be generated. For example, a sticker can be disposed on the viewfinder or image display. The sticker would preferably be transparent and include the template on the sticker. Further, if multiple images are desired, for example, for a three dimensional animation model, multiple stickers would be provided.

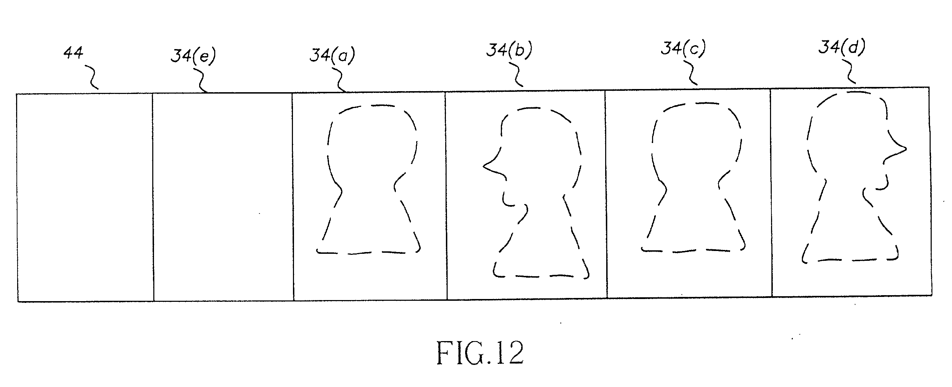

The templates could be a retro-fit for an existing image capture devices. For example, templates **34(a)-34(e)** could be disposed on a template member **44,** as shown in Figure 12. Template member **44** can be hand-held in front of viewfinder **18,** and moved so as to individually and separately align templates **34(a)-34(e)** with viewfinder **18.** Or, template member **44** could be supported on an image capture device, and a sliding motion would be used to move each template in alignment with the viewfinder. Template member 44 would be made of a transparent material, such as cellophane or plastic, with the template drawn on the transparent material.

## Claims

1. A method of generating an animation model, comprising:
providing an image capture device, the image capture device having an image display;
displaying a template in the image display;
capturing an image of a subject when the subject is framed by the template; and
generating an animation model using the captured image.

2. A method of generating an animation model, comprising:
providing an image capture device, the image capture device having a viewfinder;
viewing a template in the viewfinder;
capturing an image of the subject when the template is aligned with a subject; and
generating an animation model using the captured image.

3. A method of generating an animation model, comprising:
providing an image capture device, the image capture device having an image display and first and second templates, the first template differing from the second template;
displaying the first template in the image display;
aligning the first template with a subject;
capturing a first image of the subject;
displaying the second template in the image display;
aligning the second template with a subject;
capturing a second image of the subject; and
generating an animation model using the first and second captured images.

4. A method of generating an animation model, comprising:
(a) providing an image capture device, the image capture device having an image display and first, second, third, and fourth templates, the first template representative of a front view of a subject, the second template representative of a first side view of the subject, the third template representative of a back view of the subject, and the fourth template representative of a second side view of the subject;
(b) displaying the first template in the image display;
(c) aligning the first template with the subject;
(d) capturing a first image of the subject;
(e) repeating steps (b) through (d) using the second, third, and fourth templates to capture a second, third, and fourth image, respectively; and
(f) generating an animation model using the captured first, second, third, and fourth images.

5. An image capture device, comprising:
a plurality of templates, each of the plurality of templates differing from each other; each template comprising an outline representative of a predetermined position of a subject;
an image display for displaying each of the plurality of templates;
an image capture member for capturing an image when the subject is framed within one of the plurality of templates; and
means for generating an animation model using the captured images.

6. The image capture device of Claim 5, wherein the plurality of templates is defined as four and the predetermined positions are defined at 0, 90, 180, and 270 degrees.

7. An image capture device, comprising:
a viewfinder for locating a subject;
a first, second, third, and fourth template, each template differing from another template, each template comprising an outline representative of a predetermined position;
a rotatable template member for moving the first second, third, and fourth template relative to the viewfinder to individually align the first second, third, and fourth template in overlapping registration with the viewfinder; and
an image capture member for capturing a first, second, third, and fourth image when the first, second, third, and fourth template is aligned, respectively, with the subject.

8. The image capture device of Claim 7, wherein the first template is representative of a front view of a subject, the second template is representative of a first side view of the subject, the third template is representative of a back view of the subject, and the fourth template is representative of a second side view of the subject;

9. The image capture device of Claim 7, wherein the first, second, third, and fourth template comprises predetermined positions at 0, 90, 180, and 270 degrees, respectively of the subject.

10. A template member, comprising:
a first template representative of an outline of a front view of a subject;
a second template representative of an outline of a first side view of the subject;
a third template representative of an outline of a back view of the subject;
a fourth template representative of an outline of a second side view of the subject; and
means for moving each of templates in alignment with a viewfinder of an image capture device.
